(19) Europäisches Patentamt

European Patent Office

Office européen des brevets

(11) Veröffentlichungsnummer: **0 256 305**
**A2**

# (12) EUROPÄISCHE PATENTANMELDUNG

(21) Anmeldenummer: 87110066.5

(22) Anmeldetag: 11.07.87

(51) Int. Cl.4 **B60H 1/32** , F01P 3/20 , F25B 27/00

(30) Priorität: 12.08.86 DE 3627369

(43) Veröffentlichungstag der Anmeldung:
24.02.88 Patentblatt 88/08

(84) Benannte Vertragsstaaten:
DE ES FR GB IT SE

(71) Anmelder: **Süddeutsche Kühlerfabrik Julius Fr. Behr GmbH & Co. KG**
**Mauserstrasse 3**
**D-7000 Stuttgart 30(DE)**

(72) Erfinder: **Kleinschnitz, Paul, Dipl.-Ing. (FH)**
**Im Unterdorf 5**
**D-7050 Waiblingen(DE)**

(54) **Kraftfahrzeug mit einer wassergekühlten Brennkraftmaschine und einer Klimaanlage.**

(57) Es wird ein Kraftfahrzeug mit einer wassergekühlten Brennkraftmaschine (1) und einer Klimaanlage beschrieben. Im Kühlkreislauf ist ein Kühler (3) angeordnet, der von der Kühlluft durchströmt wird, wobei zur Förderung des Kühlluftstromes ein Lüfter (7) vorgesehen ist. Eine Kompressions-Klimaanlage umfaßt einen im Zuluftstrom des Fahrgastraumes angeordneten Verdampfer (12), einen Kompressor (10), einen Vorkondensator (5) und einen Hauptkondensator (19), wobei letzterer im Luftstrom des Kühlerlüfters angeordnet ist. Der Vorkondensator (5) ist als Kältemittel/Wasser-Wärmetauscher ausgeführt und im Kühlkreislauf der Brennkraftmaschine (1) derart angeordnet, daß der wasserseitige Zulauf des Vorkondensators (5) mit dem Ausgang des Kühlers (3) verbunden ist.

EP 0 256 305 A2

## Kraftfahrzeug mit einer wassergekühlten Brennkraftmaschine und einer Klimaanlage

Die Erfindung bezieht sich auf ein Kraftfahrzeug mit einer wassergekühlten Brennkraftmaschine und mit einem Kältekreislauf für eine Kompressionsklimaanlage der im Oberbegriff des Patentanspruchs 1 angegebenen Gattung. Ein Kraftfahrzeug dieser Art ist in der DE-OS 35 07 487 beschrieben. Mit dieser bekannten Anordnung einer Kühlanlage und einer Kompressions-Klimaanlage wurde bereits eine Verkürzung der Baulänge unter Beibehaltung der wesentlichen Komponenten und deren Anordnung zueinander erreicht. Für den Vorkondensator ist jedoch zur ausreichenden Beaufschlagung mit Kühlluft ein Zusatzlüfter erforderlich, der zusammen mit dem Vorkondensator an einer geeigneten Stelle im Motorraum angeordnet werden kann. Der für den Vorkondensator erforderliche Lüfter benötigt jedoch einen zusätzlichen Bauraum und führt zu zusätzlichen Kosten der Gesamtanlage.

Es ist daher die Aufgabe der vorliegenden Erfindung, ein Kraftfahrzeug der im Oberbegriff des Patentanspruchs 1 angegebenen Gattung derart weiterzubilden, daß der Bauraum der Kompressions-Kälteanlage weiter verringert und die Herstellkosten reduziert werden.

Diese Aufgabe wird bei einem Kraftfahrzeug der bezeichneten Art durch die kennzeichnenden Merkmale des Patentanspruchs 1 gelöst. Durch die Erfindung wird eine kompakte Bauweise erreicht, da der Kältemittel/Wasser-Wärmetauscher einen geringeren Bauraum benötigt als ein luftbeaufschlagter Wärmetauscher. Außerdem entfällt der zusätzliche Lüfter, was nicht nur zu einer Einsparung der Kosten für den Lüfter führt, sondern darüberhinaus die durch den zusätzlichen Lüfter bedingte Geräuschentwicklung entfällt. Ferner wird das elektrische Bordnetz des Fahrzeugs entlastet. Bezüglich der Anordnung des Vorkondensators im Motorraum besteht auch wesentlich größere Gestaltungsfreiheit, da keine Zu-und Abluftöffnungen in der Karosserie vorhanden sein müssen und Luftführungskanäle nicht erforderlich sind. Eine bevorzugte Ausgestaltung des Erfindungsgegenstandes besteht darin, daß dem Vorkondensator kühlwasserseitig eine Bypassleitung zugeordnet ist, so daß nicht der gesamte Kühlwasserstrom durch den Vorkondensator fließt.

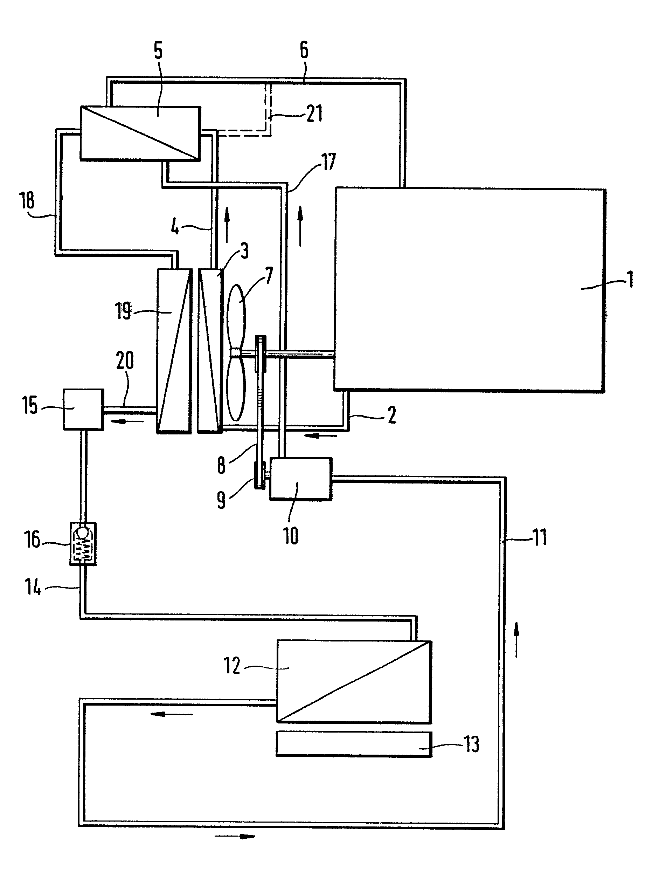

Ein Ausführungsbeispiel der Erfindung ist nachstehend anhand der Zeichnung, die einen Kühlkreislauf einer wassergekühlten Brennkraftmaschine eines Kraftfahrzeugs und einen Kältekreislauf einer Kompressions-Klimaanlage zeigt, näher erläutert.

Von einer wassergekühlten Brennkraftmaschine 1 führt ein Kühlwasserschlauch 2 zum Eingang eines Kühlers 3, der ausgangsseitig über einen Kühlwasserschlauch 4 mit einem Vorkondensator 5 verbunden ist. Von dem Vorkondensator 5 führt eine Kühlwasserschlauch 6 zurück zur Brennkraftmaschine 1. Dem Kühler 3 ist ein Lüfter 7 zugeordnet, der von der Brennkraftmaschine 1 angetrieben wird.

Über einen Antrieb 8 und eine Kupplung 9 wird ein Kompressor 10 betrieben, dessen Saugseite über eine Kältemittelleitung 11 mit einem Verdampfer 12 einer Klimaanlage verbunden ist. Der Verdampfer 12 ist mit einer Heizung 13, mit der er zusammen im Zuluftstrom für den Fahrgastraum liegt, zugeordnet; es ist jedoch ebenso möglich auf die Heizung 13 zu verzichten, sofern eine reine Kälteanlage vorhanden ist. Vor den Verdampfer 12 ist in einer Verbindungsleitung 14, die von einem Flüssigkeitsbehälter 15 zum Verdampfer 12 führt, ein Expansionsventil 16 geschaltet.

Von der Druckseite des Kompressors 10 führt eine Kältemittelleitung 17 zum Eingang des Vorkondensators 5, dessen Ausgang mittels einer Kältemittelleitung 18 mit dem Eingang eines Hauptkondensators 19 verbunden ist. Vom Hauptkondensator 19 führt eine Kältemittelleitung 20 zum Flüssigkeitsbehälter 15. Die gestrichelt dargestellte und mit 21 bezeichnete Leitung zwischen dem Kühlwasserschlauch 4 und dem Kühlwasserschluach 6 zeigt einen Bypass zum Vorkondensator 5. Der Bypass 21 kann als permanent einen Teilstrom des Kühlwassers führende Leitung oder als wahlweise zu-und abschaltbare Leitung ausgeführt sein.

Bei Betrieb der Klimaanlage wird das im Kompressor 10 verdichtete Kältemittel zunächst dem wassergekühlten Vorkondensator zugeführt, in dem das gasförmige Kältemittel annähernd bis auf das Temperaturniveau des Kühlwassers auf der Austrittsseite des Kühlers 3 abgekühlt wird. Dadurch reduziert sich der Kondensationsdruck im Hauptkondensator 19. Diese Senkung des Kondensationsdrucks ist insbesondere bei niedrigen Motordrehzahlen von Vorteil, da in diesem Betriebszustand die Luftförderung durch den Hauptkondensator 19 mittels des Lüfters 7 ohnehin gering ist.

## Ansprüche

1. Kraftfahrzeug mit einer wassergekühlten Brennkraftmaschine und einem im Kühlkreislauf angeordneten Kühler, der von der Kühlluft durchströmt wird, wobei zur Förderung des Kühlluftstromes ein Lüfter vorgesehen ist, und mit einem Kältekreislauf für eine Kompressions-Klimaanlage, der einen im Zuluftstrom des Fahrgastraumes angeordneten Verdampfer, einen Kompressor, einen Vorkondensator und einen Hauptkondensator, der im Luftstrom des Kühlerlüfters angeordnet ist, umfaßt, **dadurch gekkennzeichnet,** daß der Vorkondensator (5) als Kältemittel/Wasser-Wärmetauscher ausgeführt und im Kühlkreislauf der Brennkraftmaschine (1) derart angeordnet ist, daß der wasserseitige Zulauf des Vorkondensators (5) mit dem Ausgang des Kühlers (3) verbunden ist.

2. Kraftfahrzeug nach Anspruch 1, **dadurch gekennzeichnet,** daß der Vorkondensator (5) bezüglich seiner wasserdurchströmten Seite eine Bypassleitung (21) aufweist.